# EUROPEAN PATENT SPECIFICATION

(11) **EP 1 333 426 B1**
(45) Date of publication and mention of the grant of the patent: **09.01.2008**
(21) Application number: 03250536.4
(22) Date of filing: 29.01.2003
(51) Int. Cl.: G10L 15/26, G10L 15/18, G10L 15/22

(54) **Voice command interpreter with dialog focus tracking function and voice command interpreting method**
Sprachbefehlinterpreter mit Funktion zur Verfolgung des Dialogfokuses und Verfahren zur Interpretation von Sprachbefehlen
Interpréteur de commandes parlées avec fonction de suivi de l'objet du dialogue et méthode d'interprétation de commandes parlées

(30) Priority: 29.01.2002 KR 2002005201
(43) Date of publication of application: 06.08.2003
(73) Proprietor: SAMSUNG ELECTRONICS CO., LTD., Suwon-City, Kyungki-do (KR)
(72) Inventor: Lee, Jae-won, Seocho-gu, Seoul (KR)
(74) Representative: Greene, Simon Kenneth

(56) References cited:
- EP-A- 0 965 979
- GB-A- 2 357 364

## Description

The present invention relates to a voice command interpreter and a voice command interpreting method, and more particularly, to a method and an apparatus for interpreting a voice command received from a user for controlling a plurality of devices in order to provide to an apparatus which controls the devices information on devices to be controlled and control command information.

In the prior art, various devices, such as TVs, VCRs, audio recorders, refrigerators, and the like, are usually controlled by respective corresponding remote controllers or a single integrated remote controller which integrates the functions of remote controllers. There is a trend to connect such devices to a network, and a demand for a convenient interface to control the devices connected to a network increases.

A multiple device control method using a voice command has been developed as a method of controlling the devices connected to a network. The following two methods are examples of conventional methods of controlling multiple devices using a voice command.

In the first method, device names must be specified in a command word in order to eliminate ambiguity in the interpretation of the command word. For example, the actual operations and the target devices of the operations are specified, like "turn on the TV", "turn down the volume of the TV", "turn on the audio recorder", or "turn down the volume of the audio recorder". However, the first method is bothersome to users since the users have to repeat the device names that are the targets of operations.

In the second method, user confirmation is used to eliminate ambiguity in the interpretation of the command word. To be more specific, in the second method, if a command from the user is determined to be ambiguous, additional voice information relating to which device a user will operate is received. Like the first method, the second method is bothersome to users because the users are requested to utter additional information.

A method and system of dialog management in a conversational speech system with multiple input modalities is disclosed in GB 2,357,364. The method includes presenting a command associated with an application to a dialog manager which determines a current context of the command by reviewing a multi-modal history of events and a method responsive to the command based on the current context.

According to an aspect of the present invention, there is provided a voice command interpreter used to control a plurality of devices with a plurality of control operation attributes and a plurality of internal command words, the voice command interpreter comprising:
a voice recognition unit (103) for recognizing a voice command of a user as a command sentence for the predetermined electronic device; a command word interpretation unit (104) arranged to extract device data, control operation attributes, and a vocabulary command word, if present, from the command sentence received from the voice recognition unit (103); a control target extractor (1051) arranged to extract device data or control operation attribute data based on the vocabulary command word data and the stored focus data if no device data or no control operation attribute data is received from the command word interpretation unit (104) by checking if the command sentence does not include the control target device data or the control operation attribute data; determining if the command sentence is ambiguous, and, if so: searching for an internal command word corresponding to the pre-extracted vocabulary command word data; extracting device data and control operation attribute data corresponding to the searched internal command word; determining whether the extracted device data are consistent with current focus data; if only one set of extracted device data is consistent with the current focus, using that as the extracted data; and if a plurality of sets of data are consistent with the current focus data, providing a plurality of data to the user and receiving from the user device data and/or control operation attribute data; a focus manager (1052) arranged to update the focus data with the extracted device data and the extracted control operation attribute data; and a device controller (102) arranged to output the control target device data corresponding to the focus data and the vocabulary command word data corresponding to the vocabulary command word to the outside.

The present invention provides a voice command interpreter and a voice command interpreting method by which even when a command word of a user is ambiguous, the command word is interpreted using a function of tracking the focus of a user dialog in order to control a device.

According to another aspect of the present invention, there is provided a method of interpreting a voice command of a user in order to control a predetermined electronic device, the method comprising: recognizing a voice command of a user as a command sentence (401), and with the steps: extracting device data, control operation attribute data, and vocabulary command word data from the command sentence (402); extracting device data or control operation attribute data based on the vocabulary command word data and pre-set focus data if no device data or no control operation attribute data is extracted from the command sentence (404) by checking if the command sentence does not include the control target device data or the control operation attribute data; determining if the command sentence is ambiguous, and, if so: searching for an internal command word corresponding to the pre-extracted vocabulary command word data; extracting device data and control operation attribute data corresponding to the searched internal command word data; determining whether the extracted device data are consistent with current focus data; if only one set of extracted device data is consistent with the current focus, using that as the extracted data; and if a plurality of sets of data are consistent with the current focus data, providing a plurality of data to the user and receiving from the user device data and/or control operation attribute data; updating the focus data with the produced control target device data and the produced control operation attribute data (405); and outputting the control target device data corresponding to the focus data and the vocabulary command word data corresponding to the vocabulary command word to the outside (406).

According to yet another aspect of the invention, there is provided a computer program according to claim 5.

The above and other features and advantages of the present invention will become more apparent by describing in detail exemplary embodiments thereof with reference to the attached drawings in which:
FIG. 1 shows a data structure of a command word according to a preferred embodiment of the present invention;
FIGS. 2A and 2B show database tables in which the data structure of a command word of FIG. 1 is represented;
FIG. 3 is a block diagram of a voice command interpreter according to a preferred embodiment of the present invention;
FIG. 4 is a flowchart illustrating a method of interpreting a voice command according to a preferred embodiment of the present invention; and
FIG. 5 is a flowchart illustrating a method of extracting devices to be controlled according to a preferred embodiment of the present invention.

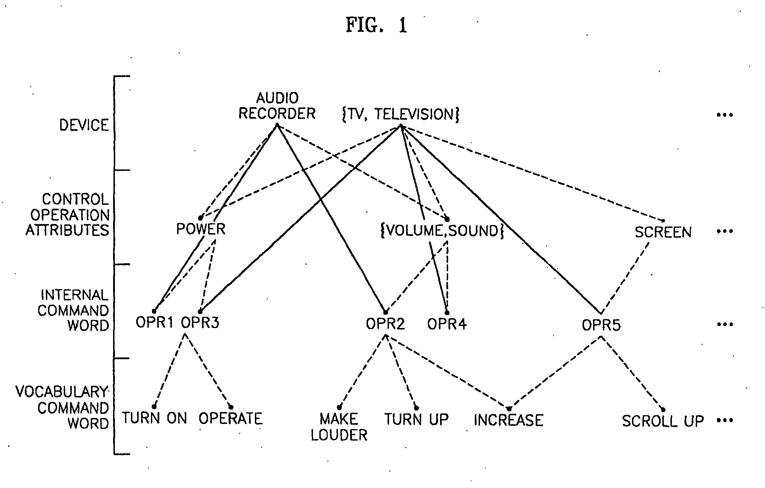

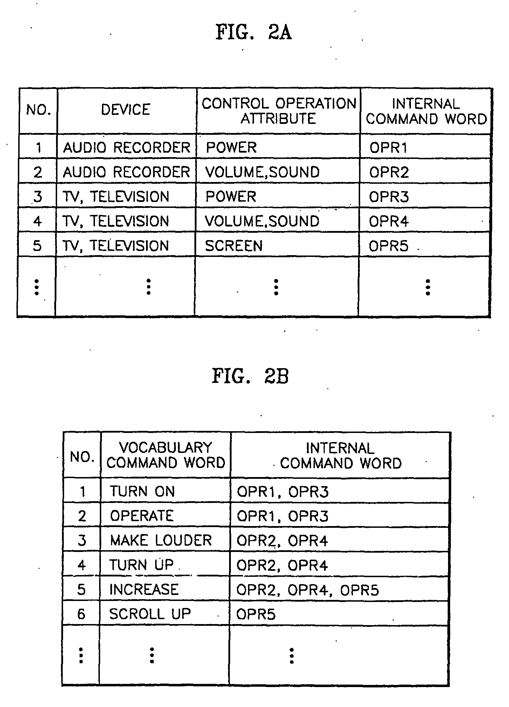

Referring to FIG. 1, data on a command word is comprised of data on a vocabulary command word, data on an internal command word, data on a device, and data on a control operation attribute. The vocabulary command word data denotes the original form of a command word of a user, and the internal command word data denotes a command word from which ambiguity in the device data and control operation attribute data of the command word of a user has been removed. The device data and the control operation attribute data of a command word are used by a voice command interpreter according to the present invention. The device data denotes a predetermined physical device to be controlled, and the control operation attribute data denotes an attribute of a device which is directly controlled. For example, if a command word "turn up the volume of the TV" is received from a user, "TV" corresponds to the device data, "volume" corresponds to the control operation attribute data, and "turn up" corresponds to the vocabulary command word data. Referring to FIGS. 2A and 2B, an internal command word data corresponding to the device data, control operation attribute data, and vocabulary command word data of the above example is "OPR4".

The data structure of a command word of FIG. 1 will now be described in detail. A plurality of devices, such as, an audio recorder, a TV (television), etc., may exist. Also, a plurality of control operation attributes associated with the above devices may exist. In FIG. 1, examples of the control operation attributes are "power", "volume (or sound)", and "screen". The control operation attributes "power" and " volume (or sound)" are associated with the device data "audio recorder" and "TV (or television)". The control operation attribute "screen" is only associated with the device data "TV". Examples of internal command word data include "OPR1", "OPR2", "OPR3", "OPR4", and "OPR5". "OPR1" is associated with the control operation attribute "power" of the device "audio recorder". "OPR2" is associated with the control operation attribute "volume" of the device "audio recorder". "OPR3" is associated with the control operation attribute "power" of the device "TV (or television)". "OPR4" is associated with the control operation attribute "volume (or sound)" of the device "TV (or television)". "OPR5" is associated with the control operation attribute "screen" of the device "TV (or television)".

Each of the control operation attributes corresponds to at least one vocabulary command word. "OPR1" and "OPR3" are associated with vocabulary command words "turn on" and "operate". "OPR2" and "OPR4" are associated with vocabulary command words "make louder", "turn up" and "increase". "OPR5" is associated with a vocabulary command word "scroll up".

A table of a command word database (DB) based on the above associations can be written as shown in FIGS. 2A and 2B.

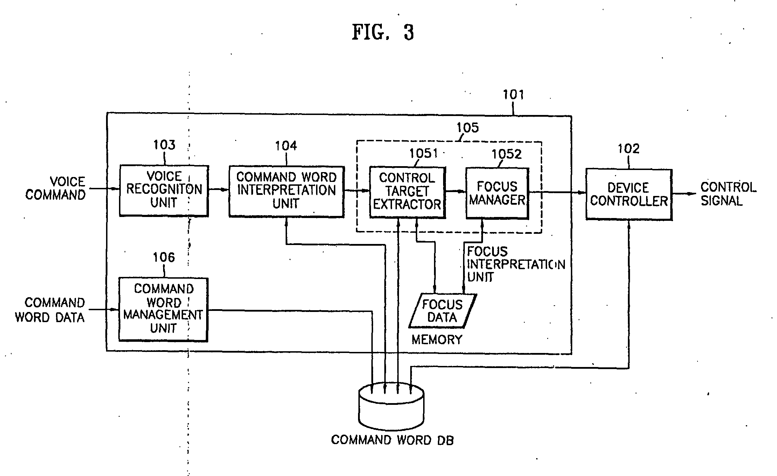

FIG. 3 is a block diagram of a voice command interpreter according to a preferred embodiment of the present invention. The voice command interpreter 101 includes a voice recognition unit 103, a command word interpretation unit 104, and a focus interpretation unit 105. The voice command interpreter 101 can further include a command word management unit 106 for managing a command word DB, which is referred to when a command word is interpreted or a device to be controlled is extracted from the command word.

The voice recognition unit 103 recognizes a voice of a user to be a command sentence and provides the recognized command sentence to the command word interpretation unit 104. Regarding the above voice recognition method performed in the voice recognition unit 103, many conventional techniques have been introduced. Hence, the voice recognition method will not be described.

The command word interpretation unit 104 interprets the recognized command sentence received from the voice recognition unit 103 by breaking down the recognized command sentence into parts of speech in order to extract data on a device to be controlled, data on a control operation attribute, and data on a vocabulary command word. Since there are many conventional methods of interpreting a predetermined sentence in units of a part of speech, they will not be described in this specification. During the interpretation of the command sentence, the command word interpretation unit 104 can become aware of data on a command word that can be used by the user by referring to the command word DB as shown in FIG. 3.

The focus interpretation unit 105 is composed of a control target extractor 1051 and a focus manager 1052. The control target extractor 1051 receives the results of the interpretation of the command sentence from the command word interpretation unit 104 and determines whether the result of the command sentence interpretation is ambiguous. That is, the interpretation result is determined to be ambiguous if the received interpretation result does not include device data or control operation attribute data. If the vocabulary command word data is "make louder", and no device data is provided, which corresponds to an ambiguous case, the internal command words corresponding to the above case are "OPR2" and "OPR4" in the table of FIG. 2B.

If the command sentence produced from the voice command of the user is ambiguous, the control target extractor 1051 removes the ambiguity from the command sentence based on vocabulary command word data, focus data stored in a memory, and command word data stored in the command word DB. Here, the focus data denotes data on a device to be controlled by a user and/or data on a control operation attribute. For example, the focus data can be single data, for example, device data "TV" or control operation attribute data "power". Preferably, the focus data can be a combination of device data and control operation attribute data, such as "TV_power".

If the focus data stored in the memory is "TV", the vocabulary command word data provided by the command word interpretation unit 104 is "make louder", and the device data and the control operation attribute data are not provided, ambiguity is removed from the command sentence of the voice command by extracting the device data and the control operation attribute data. To be more specific, first, the table of FIG. 2B is searched for internal command word data "OPR2" and "OPR4" which correspond to the vocabulary command word "make louder". Referring to the table of FIG. 2A, a data record whose device data is "TV" and internal command word data is "OPR2" or "OPR4" has a control operation attribute "volume, sound". Accordingly, the complete form of the command sentence is "make the volume or sound of the TV louder".

On the other hand, if the vocabulary command word is "increase", internal command word data corresponding to the vocabulary command word "increase" are "OPR2", "OPR4", and "OPR5". Referring to the table of FIG. 2A, the fourth and fifth data records are detected as records having device data "TV" and internal command word data "OPR2", "OPR4", or "OPR5". That is, two control operation attributes "volume or sound" and "screen" are detected. In this case, one of the two control operation attributes cannot be automatically selected. Thus, the two control operation attributes are provided to the user, and the user determines one out of the two control operation attributes.

When the control target extractor 1051 completes a command sentence through the above-described process, it provides the device data, the control operation attribute data, and command data (vocabulary command word data or internal command word data) to the focus manager 1052.

The focus manager 1052 updates the focus data with the device data and control operation attribute data received from the control target extractor 1051 and provides the device data and the internal command word data to a device controller 102 so that it can use this data to control a predetermined device.

The voice command interpreter 101 can further include a command word management unit 106 for adding command word data to the command word DB, deleting command word data from the command word DB, and updating the command word data stored in the command word DB.

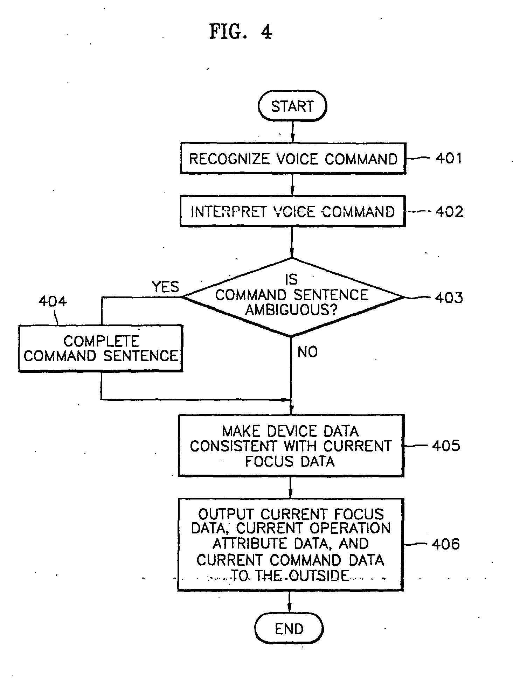

FIG. 4 is a flowchart illustrating a method of interpreting a voice command according to a preferred embodiment of the present invention. In step 401, a voice command of a user is recognized. The recognized voice command is converted into a command sentence. In step 402, the command sentence is interpreted to extract device data, control operation attribute data, and vocabulary command word data. In step 403, a determination of whether the command sentence is ambiguous is made by checking if the command sentence does not include the control target device data or the control operation attribute data. In step 404, if the command sentence is ambiguous, the command sentence is changed into a complete command sentence. In step 405, the current focus data stored in a memory is updated with the device data included in the complete command sentence. In step 406, the current device data, the current control operation attribute data, and the current command data are output to the outside. On the other hand, if it is determined in step 403 that the command sentence is not ambiguous, the method proceeds to step 405.

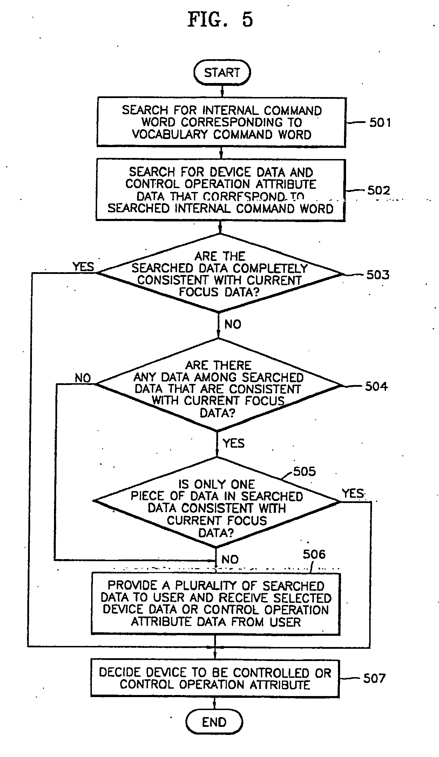

FIG. 5 is a flowchart illustrating a preferred embodiment of step 404 of FIG. 4. In step 501, an internal command word corresponding to a pre-extracted vocabulary command word is searched from a command word DB. In step 502, device data and control operation attribute data that correspond to the searched internal command word are searched from the command word DB. In step 503, it is determined whether the searched data are completely consistent with current focus data stored in a memory. If the searched data are not completely consistent with the current focus data, it is determined in step 504 whether there are any data among the searched data that are consistent with the current focus data. If consistent data exists in the searched data, it is determined in step 505 whether the number of data consistent with the current focus data is one. If a plurality of data are consistent with the current focus data, in step 506, the plurality of consistent data are provided to the user, and device data or control operation attribute data is received. In step 507, a device to be controlled or a control operation attribute is decided. In this way, a command sentence of the user is interpreted.

On the other hand, if it is determined in step 503 that the searched data are completely consistent with the current focus data, the method proceeds to step 507. If it is determined in step 504 that no searched data is consistent with the current focus data, the method proceeds to step 506. If only one piece of data is searched and found to be consistent with the current focus data, the method proceeds to step 507.

The embodiments of the present invention can be written as computer programs and can be implemented in general-use digital computers that execute the programs using a computer readable recording medium. The data structure used in the above-described embodiment of the present invention can be recorded in a computer readable recording medium in many ways. Examples of computer readable recording media include magnetic storage media (e.g., ROM, floppy disks, hard disks, etc.), optical recording media (e.g., CD-ROMs, or DVDs), and a storage medium such as a carrier wave (e.g., transmission through the Internet).

While the present invention has been particularly shown and described with reference to exemplary embodiments thereof, it will be understood by those of ordinary skill in the art that various changes in form and details may be made therein without departing from the scope of the present invention as defined by the following claims.

According to the present invention, users do not need to indicate the name of a control target device every time, and a command word to be spoken by users can be shortened. In addition, even if a new device is added to a network, addition of only command word data enables the device to be controlled and prevents a collision with voice command words for other devices.

## Claims

1. A voice command interpreter used to control a plurality of devices with a plurality of control operation attributes and a plurality of internal command words, the voice command interpreter comprising:
a voice recognition unit (103) for recognizing a voice command of a user as a command sentence for the predetermined electronic device;
a command word interpretation unit (104) arranged to extract device data, control operation attributes, and a vocabulary command word, if present, from the command sentence received from the voice recognition unit (103);
a control target extractor (1051) arranged to extract device data or control operation attribute data based on the vocabulary command word data and the stored focus data if no device data or no control operation attribute data is received from the command word interpretation unit (104) by checking if the command sentence does not include the control target device data or the control operation attribute data;
determining if the command sentence is ambiguous, and, if so:
searching for an internal command word corresponding to the pre-extracted vocabulary command word data;
extracting device data and control operation attribute data corresponding to the searched internal command word;
determining whether the extracted device data are consistent with current focus data;
if only one set of extracted device data is consistent with the current focus, using that as the extracted data; and
if a plurality of sets of data are consistent with the current focus data, providing a plurality of data to the user and receiving from the user device data and/or control operation attribute data;
a focus manager (1052) arranged to update the focus data with the extracted device data and the extracted control operation attribute data; and
a device controller (102) arranged to output the control target device data corresponding to the focus data and the vocabulary command word data corresponding to the vocabulary command word to the outside.

2. A voice command interpreter according to claim 1 wherein the control target extractor (1051) is arranged, if no searched data are consistent with the current focus data, to provide a plurality of data to the user and to receive from the user device data and/or control operation attribute data.

3. A method of interpreting a voice command of a user in order to control a predetermined electronic device, the method comprising:
recognizing a voice command of a user as a command sentence (401), and with the steps:
extracting device data, control operation attribute data, and vocabulary command word data from the command sentence (402);
extracting device data or control operation attribute data based on the vocabulary command word data and pre-set focus data if no device data or no control operation attribute data is extracted from the command sentence (404) by checking if the command sentence does not include the control target device data or the control operation attribute data;
determining if the command sentence is ambiguous (403), and, if so:
searching for an internal command word corresponding to the pre-extracted vocabulary command word data (501);
extracting device data and control operation attribute data corresponding to the searched internal command word data (502);
determining whether the extracted device data are consistent with current focus data (503, 504, 505);
if only one set of extracted device data is consistent with the current focus, using that as the extracted data (505); and
if a plurality of sets of data are consistent with the current focus data, providing a plurality of data to the user and receiving from the user device data and/or control operation attribute data (506);
updating the focus data with the produced control target device data and the produced control operation attribute data (405); and
outputting the control target device data corresponding to the focus data and the vocabulary command word data corresponding to the vocabulary command word to the outside (406).

4. A method according to claim 3, further comprising, if no searched data are consistent with the current focus data, to provide a plurality of data to the user and to receive from the user device data and/or control operation attribute data.

5. A computer program comprising computer code means adapted to perform all of the steps of claim 3 or 4 when said program is run on a computer.

6. A computer program as claimed in claim 5 embodied on a computer readable medium.

## Patentansprüche

1. Sprachbefehlsinterpreter, der zum Steuern einer Mehrzahl von Geräten mit einer Mehrzahl von Steuervorgangsattributen und einer Mehrzahl von internen Befehlsworten verwendet wird, wobei der Sprachbefehlsinterpreter umfasst:
eine Spracherkennungseinheit (103) zum Erkennen eines Sprachbefehls eines Benutzers als Befehlssatz für das bestimmte elektronische Gerät;
eine Befehlswortinterpretationseinheit (104), die so ausgebildet ist, dass sie Gerätedaten, Steuervorgangsattribute und ein Vokabularbefehlswort, wenn vorhanden, aus dem von der Spracherkennungseinheit (103) empfangenen Befehlssatz extrahiert;
einen Steuerzielextraktor (1051), der so ausgebildet ist, dass er Gerätedaten oder Steuervorgangsattributdaten basierend auf den Vokabularbefehlswortdaten und den gespeicherten Fokusdaten extrahiert, wenn keine Gerätedaten oder keine Steuervorgangsattributdaten von der Befehlswortinterpretationseinheit (104) empfangen sind, indem geprüft wird, ob der Befehlssatz keine Steuerzielgerätedaten oder Steuervorgangsattributdaten enthält;
Bestimmen, ob der Befehlssatz mehrdeutig ist, und wenn dies der Fall ist:
Suchen nach einem internen Befehlswort, das den vorextrahierten Vokabularbefehlswortdaten entspricht;
Extrahieren von Gerätedaten und Steuervorgangsattributdaten entsprechend dem gesuchten internen Befehlswort;
Bestimmen, ob die extrahierten Gerätedaten und aktuelle Fokusdaten konsistent sind;
wenn nur ein Satz extrahierter Gerätedaten zu den aktuellen Fokusdaten konsistent sind, Verwenden dieser als extrahierte Daten; und
wenn eine Mehrzahl von Datensätzen zu den aktuellen Fokusdaten konsistent sind, Angeben einer Mehrzahl von Daten für den Benutzer und
Empfangen von Gerätedaten und/oder Steuervorgangsattributdaten vom Benutzer;
eine Fokusverwaltung (1052), die so ausgebildet ist, dass sie die Fokusdaten mit den extrahierten Gerätedaten und den extrahierten Steuervorgangsattributdaten aktualisiert; und
eine Gerätesteuerung (102), die so ausgebildet ist, dass sie die Steuerzielgerätedaten entsprechend den Fokusdaten und den Vokabularbefehlswortdaten entsprechend dem Vokabularbefehlswort nach außen ausgibt.

2. Sprachbefehlsinterpreter nach Anspruch 1, wobei der Steuerzielextraktor (1051) so ausgebildet ist, dass er, wenn keine Suchdaten zu den aktuellen Fokusdaten konsistent sind, eine Mehrzahl von Daten für den Benutzer angibt und vom Benutzer Gerätedaten und/oder Steuervorgangsattributdaten empfängt.

3. Verfahren zum Interpretieren eines Sprachbefehls eines Benutzers zum Steuern eines bestimmten elektronischen Geräts, wobei das Verfahren umfasst:
Erkennen eines Sprachbefehls eines Benutzers als Befehlssatz (401) und mit den Schritten:
Extrahieren von Gerätedaten, Steuervorgangsattributdaten und Vokabularbefehlswortdaten aus dem Befehlssatz (402);
Extrahieren von Gerätedaten oder Steuervorgangsattributdaten basierend auf den Vokabularbefehlswortdaten und voreingestellten Fokusdaten, wenn keine Gerätedaten oder keine Steuervorgangsattributdaten aus dem Befehlssatz (404) extrahiert sind, indem geprüft wird, ob der Befehlssatz keine Steuerzielgerätedaten oder Steuervorgangsattributdaten enthält;
Bestimmen, ob der Befehlssatz mehrdeutig ist (403), und wenn dies der Fall ist:
Suchen nach einem internen Befehlswort, das den vorextrahierten Vokabularbefehlswortdaten entspricht (501);
Extrahieren von Gerätedaten und Steuervorgangsattributdaten entsprechend den gesuchten internen Befehlswortdaten (502);
Bestimmen, ob die extrahierten Gerätedaten zu aktuellen Fokusdaten konsistent sind (503, 504, 505);
wenn nur ein Satz extrahierter Gerätedaten zu dem aktuellen Fokus konsistent ist, Verwenden dieser als die extrahierten Daten (505); und wenn eine Mehrzahl von Datensätzen zu den aktuellen Fokusdaten konsistent sind, Angeben einer Mehrzahl von Daten für den Benutzer und Empfangen von Gerätedaten und/oder Steuervorgangsattributdaten vom Benutzer (506);
Aktualisieren der Fokusdaten mit den erzeugten Steuerzielgerätedaten und den erzeugten Steuervorgangsattributdaten (405); und
Ausgeben der Steuerzielgerätedaten entsprechend den Fokusdaten und den Vokabularbefehlswortdaten entsprechend dem Vokabularbefehlswort nach außen (406).

4. Verfahren nach Anspruch 3, ferner umfassend, wenn keine gesuchten Daten zu den aktuellen Fokusdaten konsistent sind, Angeben einer Mehrzahl von Daten für den Benutzer und Empfangen von Gerätedaten und/oder Steuervorgangsattributdaten vom Benutzer.

5. Computerprogramm umfassend Computercodemittel, die zum Durchführen aller Schritte des Anspruchs 3 oder 4 geeignet sind, wenn das Programm auf einem Computer läuft.

6. Computerprogramm nach Anspruch 5, das auf einem computerlesbaren Medium verkörpert ist.

## Revendications

1. Interpréteur de commandes vocales utilisé pour contrôler une pluralité de dispositifs avec une pluralité d'attributs d'opération de contrôle et une pluralité de mots de commandes internes, l'interpréteur de commandes vocales comprenant :
une unité de reconnaissance vocale (103) destinée à reconnaître une commande vocale d'un utilisateur comme phrase de commande pour le dispositif électronique prédéterminé ;
une unité d'interprétation de mot de commande (104) agencée pour extraire des données de dispositif, des attributs d'opération de contrôle, et un mot de commande de vocabulaire, si présent, de la phrase de commande reçue en provenance de l'unité de reconnaissance vocale (103) ;
un extracteur cible de contrôle (1051) agencé pour extraire des données de dispositif ou des données d'attribut d'opération de contrôle sur la base des données de mot de commande de vocabulaire et des données d'objet stockées si aucune donnée de dispositif ou aucune donnée d'attribut d'opération de contrôle n'est reçue en provenance de l'unité d'interprétation de mot de commande (104) en vérifiant si la phrase de commande n'inclut pas les données de dispositif cible de contrôle ou les données d'attribut d'opération de contrôle ;
déterminer si la phrase de commande est ambiguë, et, si c'est le cas :
rechercher un mot de commande interne correspondant aux données de mot de commande de vocabulaire pré-extraites ;
extraire des données de dispositif et des données d'attribut d'opération de contrôle correspondant au mot de commande interne recherché ;
déterminer si les données de dispositif extraites sont en accord avec les données d'objet en cours ;
si un seul ensemble de données de dispositif extraites est en accord avec l'objet en cours, utiliser celui-ci comme données extraites ; et
si une pluralité d'ensembles de données sont en accord avec les données d'objet en cours, envoyer une pluralité de données à l'utilisateur et recevoir en provenance de l'utilisateur des données de dispositif et/ou des données d'attribut d'opération de contrôle ;
un gestionnaire d'objet (1052) agencé pour mettre à jour les données d'objet avec les données de dispositif extraites et les données d'attribut d'opération de contrôle extraites ; et
un contrôleur de dispositif (102) agencé pour sortir les données de dispositif cible de contrôle correspondant aux données d'objet et les données de mot de commande de vocabulaire correspondant au mot de commande de vocabulaire vers l'extérieur.

2. Interpréteur de commandes vocales selon la revendication 1, dans lequel l'extracteur cible de contrôle (1051) est agencé, si aucune donnée recherchée n'est en accord avec les données d'objet en cours, pour envoyer une pluralité de données à l'utilisateur et pour recevoir en provenance de l'utilisateur des données de dispositif et/ou des données d'attribut d'opération de contrôle.

3. Procédé d'interprétation d'une commande vocale d'un utilisateur afin de contrôler un dispositif électronique prédéterminé, le procédé comprenant :
la reconnaissance d'une commande vocale d'un utilisateur comme phrase de commande (401), et avec les étapes consistant à :
extraire des données de dispositif, des données d'attribut d'opération de contrôle et des données de mot de commande de vocabulaire de la phrase de commande (402) ;
extraire des données de dispositif ou des données d'attribut d'opération de contrôle sur la base des données de mot de commande de vocabulaire et des données d'objet prédéfinies si aucune donnée de dispositif ou aucune donnée d'attribut d'opération de contrôle n'est extraite de la phrase de commande (404) en vérifiant si la phrase de commande n'inclut pas les données de dispositif cible de contrôle ou les données d'attribut d'opération de contrôle ;
déterminer si la phrase de commande est ambiguë (403), et, si c'est le cas :
rechercher un mot de commande interne correspondant aux données de mot de commande de vocabulaire pré-extraites (501) ;
extraire des données de dispositif et des données d'attribut d'opération de contrôle correspondant aux données de mot de commande interne recherché (502) ;
déterminer si les données de dispositif extraites sont en accord avec les données d'objet en cours (503, 504, 505) ;
si un seul ensemble de données de dispositif extraites est en accord avec l'objet en cours, utiliser celui-ci comme données extraites (505) ; et
si une pluralité d'ensembles de données sont en accord avec les données d'objet en cours, envoyer une pluralité de données à l'utilisateur et recevoir en provenance de l'utilisateur des données de dispositif et/ou des données d'attribut d'opération de contrôle (506) ;
mettre à jour les données d'objet avec les données de dispositif cible de contrôle produites et les données d'attribut d'opération de contrôle produites (405) ; et
sortir les données de dispositif cible de contrôle correspondant aux données d'objet et les données de mot de commande de vocabulaire correspondant au mot de commande de vocabulaire vers l'extérieur (406).

4. Procédé selon la revendication 3, comprenant en outre, si aucune donnée recherchée n'est en accord avec les données d'objet en cours, le fait d'envoyer une pluralité de données à l'utilisateur et de recevoir en provenance de l'utilisateur des données de dispositif et/ou des données d'attribut d'opération de contrôle.

5. Programme informatique comprenant un moyen de code informatique adapté pour effectuer toutes les étapes de la revendication 3 ou 4 lorsque ledit programme est exécuté sur un ordinateur.

6. Programme informatique selon la revendication 5 incorporé sur un support lisible par ordinateur.
